(19) Europäisches Patentamt
European Patent Office
Office européen des brevets

(11) **EP 1 354 660 A1**

(12) **EUROPEAN PATENT APPLICATION**
published in accordance with Art. 158(3) EPC

(43) Date of publication:
**22.10.2003 Bulletin 2003/43**

(21) Application number: **01273489.3**

(22) Date of filing: **14.12.2001**

(51) Int Cl.7: **B23K 20/12**

(86) International application number:
**PCT/JP01/10970**

(87) International publication number:
**WO 02/058880 (01.08.2002 Gazette 2002/31)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **23.01.2001 JP 2001014918**

(71) Applicant: **HITACHI CONSTRUCTION MACHINERY CO., LTD.**
**Bunkyo-ku, Tokyo 112-0004 (JP)**

(72) Inventors:
• **MIYANAGI, Naoki**
**Niihari-gun, Ibaraki 315-0052 (JP)**

• **TAKANO, Yutaka**
**Inashiki-gun, Ibaraki 300-0332 (JP)**
• **YAMAMOTO, Hikaru**
**Ryugasaki-shi, Ibaraki 301-0001 (JP)**
• **TAKATANI, Toru**
**Tsuchiura-shi, Ibaraki 300-0819 (JP)**
• **HIRAKAWA, Manabu**
**Niihari-gun, Ibaraki 315-0055 (JP)**
• **SHINODA, Takeshi**
**Nagoya-shi, Aichi 467-0012 (JP)**

(74) Representative: **Beetz & Partner Patentanwälte**
**Steinsdorfstrasse 10**
**80538 München (DE)**

(54) **FRICTION JOINING METHOD AND FRICTION JOINED BODY**

(57) Plate parts (1, 2) to be joined are formed with flat meeting surfaces (1A, 2A) and beveled surfaces (1B, 2B) at the respective joining ends, and fixed in a welding position with the flat meeting surfaces (1A, 2A) in abutting engagement with each other. In this state, a cladding material (4) is pressed against a groove (3) between the two plate parts (1, 2) and at the same time put in high speed rotation. Heat of high temperature is generated by friction between contacting surfaces of the plate parts (1, 2) and the cladding material (4). As the cladding material (4) is moved along the meeting surfaces (1A, 2A), part of plasticized cladding material at the lower end of the cladding material (4) is left and deposited on the front side of the groove (3), contributing to increase the cladding volume of a weld portion (5) on the front side of the groove (3) and to enhance the strength of bondage between the two plate parts (1, 2).

Fig. 1

EP 1 354 660 A1

## Description

TECHNICAL FIELD

This invention relates to a method of friction welding and a frictionally welded structure for joining or welding flat plate parts or similar structural material together by frictional heat.

BACKGROUND ART

Generally, for welding or joining two metal parts together, it has been a widely adopted method to heat joining metals into a molten or plasticized state by the use of a heat source such as arc (electric arc), laser or electron beam so that the two metals are joined together by re-solidification upon cooling.

However, the welding method utilizing melting and re-solidification of metals involves enormous consumption of energy for heating metals into a molten state, in addition to the necessity for equipments of large scale. Further, when heating metals into a molten state for welding purposes, it has been a common experience that part of molten metals evaporates and scatters around a working spot. Evaporated metals not only deteriorates the working environment but also gives adverse effects on human bodies.

On the other hand, there has been known a method of frictionally joining or welding metals (plate parts) by utilizing frictional heat as described in British Patent No. 572,789, instead of the method of heating and melting metals by the use of a heat source as described above.

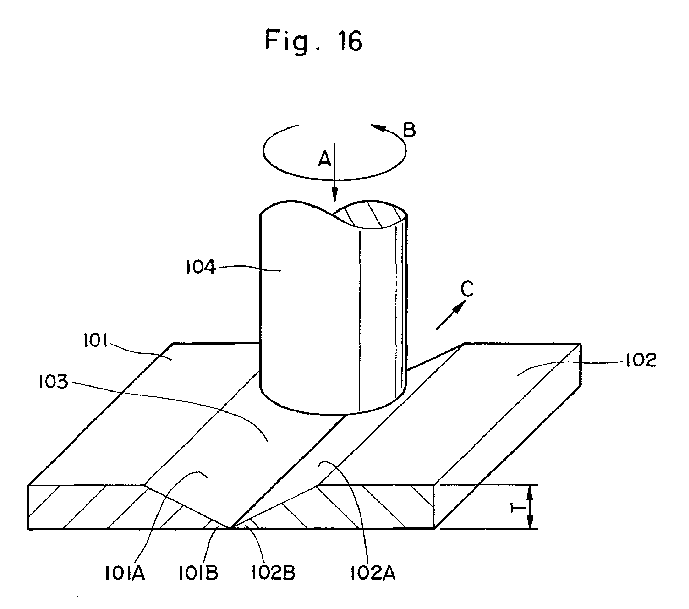

Illustrated in Figs. 16 to 18 is a method of frictionally joining metals by the prior art method as described in the above-mentioned British Patent.

In these figures, indicated at 101 and 102 are plate parts to be joined together. These plate parts 101 and 102 are, for example, steel plates having a thickness T and are formed with a groove 103 of substantially V-shape along the respective joining ends.

In this instance, the groove 103 is defined by beveled surfaces 101A and 102A which are formed by obliquely cutting joining ends of the plate parts 101 and 102 at a predetermined inclination angle. Accordingly, edges 101B and 102B, which are of an acute angle and in line contact with each other, are formed by the beveled surfaces 101A and 102A at the joining ends of the plate parts 101 and 102. The plate parts 101 and 102 are placed in a butt welding position with the edges 101B and 102B in line contact with each other, and frictionally welded together by the use of a welding or cladding material 104 as described below.

Indicated at 104 is the cladding material which is employed for frictionally joining the plate parts 101 and 102 together. The cladding material 104 is constituted by a cylindrical metal rod, and its lower end face is pressed toward and against the groove 103 between plate parts 101 and 102 as indicated by arrow A in Fig. 16. While a lower end face of the cladding material 104 is pressed against the beveled surfaces 101A and 102A, the cladding material 104 is put in high speed rotation in the direction indicated by arrow B in Fig. 16 to produce heat by friction between contacting surfaces of the cladding material 104 and the plate parts 101 and 102.

As a result, plasticization occurs to a lower end portion of the cladding material 104 as well as to the beveled surfaces 101A and 102A of the plate parts 101 and 102 which are in frictional contact with the cladding material 104. In the next place, in this state, the cladding material 104 is moved in the direction indicated by arrow C in Fig. 16. At this time, part of plasticized cladding material at the lower end of the cladding material 104 is left and deposited on the groove 103 (on the beveled surfaces 101A and 102A) between the plate parts 101 and 102.

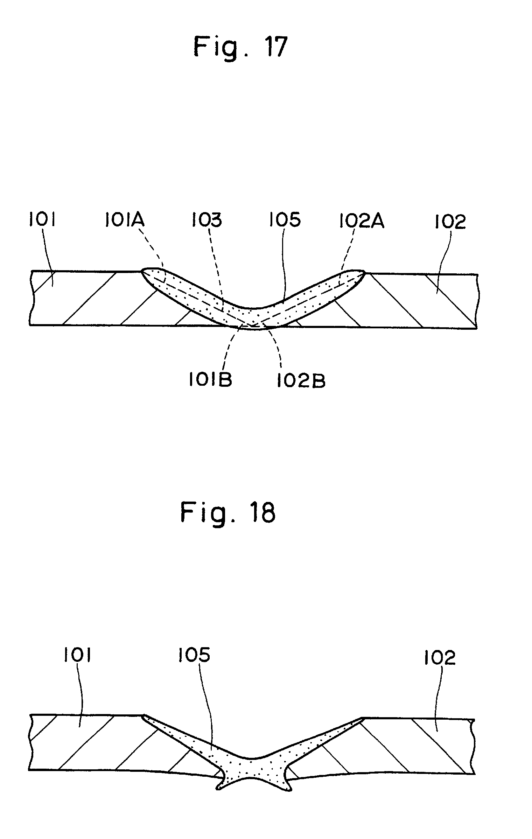

Then, as the cladding material 104 is moved away to a distant point as shown in Fig. 17, part of plasticized material occurring on the surface of the groove 103 and deposited cladding material 104 are allowed to solidify together on cooling to form a cladded weld portion 105 which joins the plate parts 101 and 102 integrally with each other.

However, as shown in Fig. 16, a number of problems arise with the prior art method described above, in which the groove 103 is formed to a depth which is equal with the thickness T of the plate parts 101 and 102, and sharp edges 101B and 102B are formed at the joining ends of the plate parts 101 and 102 by the beveled surfaces 101A and 102A.

Namely, as the cladding material 104 which is put in high speed rotation is pressed against the beveled surfaces 101A and 102A of the plate parts 101 and 102, a metal portion which has been brought into a plasticized state by the frictional heat can be pushed out to the back side of the plate parts 101 and 102 through the sharp edges 101B and 102B. Thus, in the case of the prior art method, it is difficult to deposit a sufficient amount of material on the weld portion 105 at the surface of the groove 103. Accordingly, there arises a problem that the strength of bondage tends to lower.

Especially, on the side of the acute angle edges 101B and 102B of the plate parts 101 and 102 which are simply in line contact with each other, frictional heat tends to stagnate and linger at and around the edges 101B and 102B. Therefore, in some cases, plasticization proceeds to an excessive degree locally at and in the vicinity of the edges 101B and 102B. When plasticized to an excessive degree, the edges 101B and 102B are easily deformed under the pressure exerted by the cladding material 104 as indicated by an arrow A in Fig. 16 and thereby pushed out toward the back side of the plate parts 101 and 102, adversely deforming the shape of the weld portion 105 as shown particularly in Fig. 18.

Further, in case the weld portion 105 is deformed into an abnormal shape as shown in Fig. 18, it is likely that distortion or straining occurs between the plate parts 101 and 102. Such an abnormally deformed weld portion not only weakens the strength of bondage between the two plates but also lowers the yield of products because commercial value of products can be impaired detrimentally, for example, by inclination of one plate part 101 relative to the other 102.

## DISCLOSURE OF THE INVENTION

In view of the above-discussed problems with the prior art, it is an object of the present invention to provide a method of friction welding for joining parts together, and a frictionally welded structure, permitting to deposit a sufficient amount of cladding material on the front side of a groove to form a weld portion of enhanced strength between the two parts, and to improve the yield of products.

Namely, in order to achieve the above-stated objective, according to the present invention, there is provided a method of friction welding, which comprises: a fixing stage of providing a flat meeting surface and a beveled surface at a joining end of each one of parts to be welded together to form a groove between and along joining ends of said two parts, and fixing said parts with flat meeting surfaces of the respective parts held in abutting engagement with each other; a frictional heat generating stage of generating frictional heat by pressing an end of a consumable cladding material against said beveled surfaces of said two parts while moving said cladding material relative to the fixed parts; and a welding stage of bringing a contacting distal end portion of the cladding material to a plasticized state by the frictional heat and feeding plasticized cladding material to said groove between said two parts, urging said plasticized cladding material to flow toward and along said flat meeting surfaces to form a weld portion between said parts.

In the case of the method of friction welding according to the present invention, the two parts to be joined are each formed with a flat meeting surface at a joining end, and the two parts are put in a butt welding position with the respective flat meeting surfaces held in abutting engagement with each other. Since joining ends of the two parts are not formed into an edge of an acute angle, it becomes possible to prevent frictional heat from stagnating and lingering at the joining ends of the two parts while a cladding material under pressure is moved relative to the parts to generate heat by friction of contacting surfaces, thus preventing plasticization from proceeding to an excessively degree locally on the side of the meeting surfaces of the parts.

The cladding material is held in frictional contact with middle portions of beveled surfaces of the groove, so that a contacting end portion of the cladding material is pushed gradually deeper and deeper toward the bottom of the groove as the contacting lower end portion is brought into a plasticized state, and at the same time kept in movement relative to the joining two parts and moved along the meeting surfaces. Plasticization also occurs to the beveled surfaces on the two parts as a result of frictional contact with the cladding material, and as the cladding material is moved away, the plasticized portion of the beveled surfaces and part of the cladding material which has been deposited on the groove are allowed to solidify on cooling to form a cladded weld portion thereby to join the two parts integrally with each other.

The flat meeting surfaces at the joining ends of the two parts serve to prevent plasticized material from flowing to the back side of the joining two parts. Besides, the flat meeting surfaces serve to secure sufficient rigidity of the joining ends of the parts for sustaining the pressure which is exerted by the cladding material, and to stabilize the shape of a weld portion to be formed.

Further, according to the present invention, there is provided a method of friction welding, which comprises: a fixing stage of providing a flat meeting surface and a beveled surface at a joining end of each one of parts to be welded together to form a groove between and along joining ends of said two parts, and fixing said parts with flat meeting surfaces of the respective parts held in abutting engagement with each other through a gap space; a frictional heat generating stage of generating frictional heat by pressing an end of a consumable cladding material against said beveled surfaces of said two parts while moving said cladding material relative to the fixed parts; and a welding stage of bringing a contacting distal end portion of the cladding material to a plasticized state by the frictional heat and feeding plasticized cladding material to said groove between said two parts, urging said plasticized cladding material to flow toward and along said flat meeting surfaces to fill up said gap space and to form a weld portion between said parts.

In the case of the just-described method of friction welding according to the present invention, two parts can be frictionally welded together with an intervening gap space between flat meeting surfaces of the two joining parts. Even in this case, the joining ends of the parts are not formed into an edge of an acute angle, so that it becomes possible to prevent frictional heat from stagnating and lingering locally on the side of the meeting surfaces of the two parts while a cladding material under pressure is moved relative to the parts to generate heat by friction of contacting surfaces, thus to prevent plasticization from proceeding to an excessive degree locally on the side of the meeting surfaces.

Further, according to the present invention, there is provided a frictionally welded structure composed of a couple of parts joined together by: providing a flat meeting surface and a beveled surface at a joining end of each one of parts to form a groove between and along joining ends of said two parts, and fixing said parts with flat meeting surfaces of the respective parts held in abutting engagement with each other; generating frictional heat by pressing an end of a consumable cladding material against said beveled surfaces of said two parts while moving said cladding material relative to the fixed parts; and bringing a contacting distal end portion of said cladding material to a plasticized state by the frictional heat and feeding plasticized cladding material to said groove between said two parts, urging said plasticized cladding material to flow toward and along said flat meeting surfaces to form a weld portion between said parts.

In one preferred form of the frictionally welded structure according to the present invention, the flat meeting surfaces of the parts are joined together in abutting engagement with each other by the cladding material.

In another preferred form of the frictionally welded structure according to the present invention, the flat meeting surfaces of the parts are joined together by the cladding material in such a way as to leave an intervening gap space therebetween.

BRIEF DESCRIPTION OF THE DRAWINGS

In the accompanying drawings:

Fig. 1 is a perspective view of a couple of plate parts and a cladding material, employed in a first embodiment of the present invention;
Fig. 2 is a schematic view of an apparatus for friction welding according to the first embodiment of the invention, showing the general layout of the apparatus;
Fig. 3 is a sectional view of the plate parts in a fixing stage;
Fig. 4 is a sectional view of the plate parts and a cladding material which is pressed against a groove shown in Fig.3;
Fig. 5 is a sectional view similar to Fig. 4, but showing a frictional heat generating stage of the first embodiment;
Fig. 6 is a sectional view of a welding stage of the first embodiment;
Fig. 7 is a perspective view of plate parts which are joined by the friction welding;
Fig. 8 is a sectional view of a comparative example employing a groove which is conspicuously narrow in open angle;
Fig. 9 is a sectional view of another comparative example employing a groove which is conspicuously wide in open angle;
Fig. 10 is a sectional view of plate parts which are frictionally welded together according to a second embodiment of the present invention;
Fig. 11 is a sectional view of plate parts which are frictionally welded together according to a third embodiment of the present invention;
Fig. 12 is a sectional view of plate parts in a fixing stage of a fourth embodiment of the invention;
Fig. 13 is a sectional view of a frictional heat generating stage of the fourth embodiment;
Fig. 14 is a sectional view of a welding stage of the fourth embodiment;
Fig. 15 is a sectional view of the plate parts which are frictionally welded together according to the fourth embodiment;
Fig. 16 is a perspective view of plate parts and a cladding material which are employed in a prior art friction welding method;
Fig. 17 is a sectional view of the plate parts which are frictionally welded together by the prior art method; and
Fig. 18 is a sectional view of plate parts which are frictionally welded together by the prior art method, with a weld portion which is deformed into an abnormal shape.

BEST MODE FOR CARRYING OUT THE INVENTION

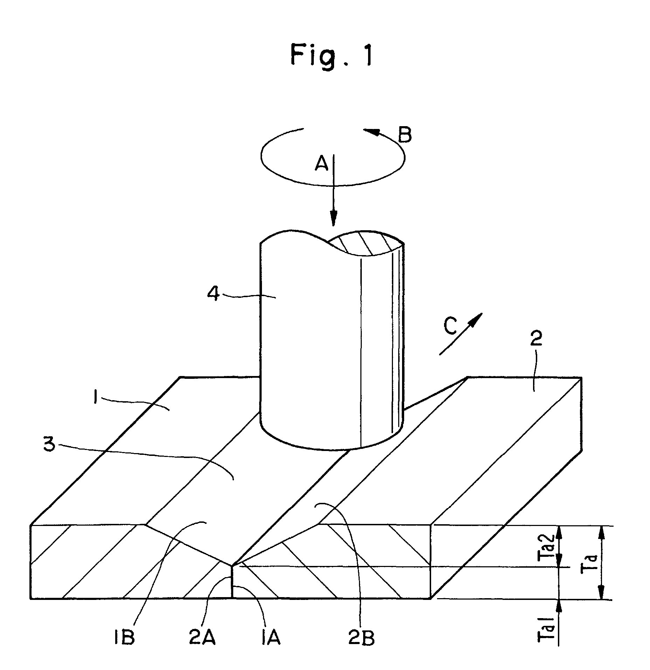

Hereafter, the method of frictionally welding plate parts and the frictionally welded metal structure according to the present invention are described more particularly by way of its preferred embodiments with reference to Figs. 1 through 15 of the accompanying drawings. Firstly, shown in Figs. 1 through 7 is a first embodiment of the present invention.

In these figures, indicated at 1 and 2 are plate parts to be joined together according to the present embodiment. The plate parts 1 and 2 are each in the form of a flat plate, for example steel plates, and the plate parts having a thickness Ta, and are provided with a groove 3 in the form of an open groove of V-shape along their joining ends.

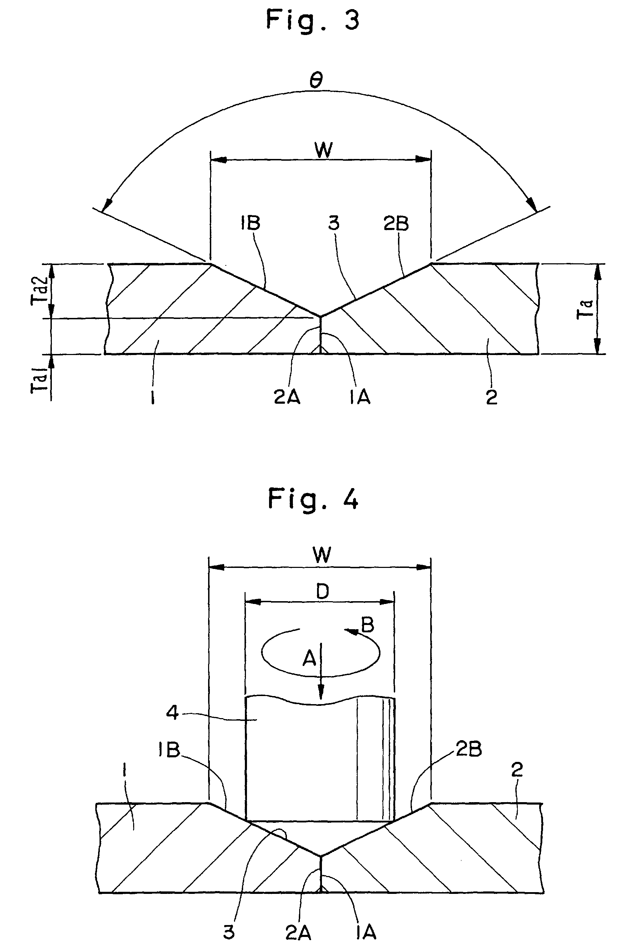

At the joining ends, the plate parts 1 and 2 are provided with flat meeting surfaces 1A and 2A each having a height of Ta1, along with beveled surfaces 1B and 2B which are inclined toward each other with a predetermined inclination angle. Formed between and by the beveled surfaces 1B and 2B is a groove 3 having a depth Ta2, and the groove 3 is in dimensional relations of Ta2 = Ta - Ta1 with respect to the thickness of the plate parts 1 and 2 and the height of the flat meeting surfaces 1A and 2A. As seen in Fig. 4, the groove 3 has a width W which is larger than the outside diameter D of the cladding material 4 (W>D).

In this instance, as shown in Fig. 3, the groove 3 is arranged to have an open angle $\theta$ which is, for example, in the range of from 60 to 150 degrees. Further, the height Ta1 of the flat meeting surfaces 1A and 2A is arranged to fall in the range of from 1/10 to 1/2 of the thickness Ta of the joining plate parts 1 and 2, namely, the height Ta1 is approximately in the dimensional relations of $Ta/10 \leqq Ta1 \leqq Ta/2$. The plate parts 1 and 2 are set in a welding position, having the flat meeting surfaces 1A and 2A in abutting engagement with each other, and frictionally welded together by the use of the cladding material 4 in the manner as will be described in greater detail hereinafter.

Indicated at 4 is the cladding material for frictionally joining the plate parts 1 and 2. The cladding material 4 is formed of the same material as the plate parts 1 and 2 and in an elongated cylindrical or rod-like shape. As shown in Fig. 4, the cladding material 4 has an outside diameter D which is smaller than the width W of the groove 3, namely, which is in dimensional relations of D < W. By the use of a frictional welding apparatus 11 which will be described after, the lower end face of the cladding material 4 is pressed against the groove 3 between the two joining plate parts 1 and 2 as indicated by arrow A in Fig. 1, and at the same time the cladding material 4 is put in high speed rotation as indicated by arrow B in Fig. 1.

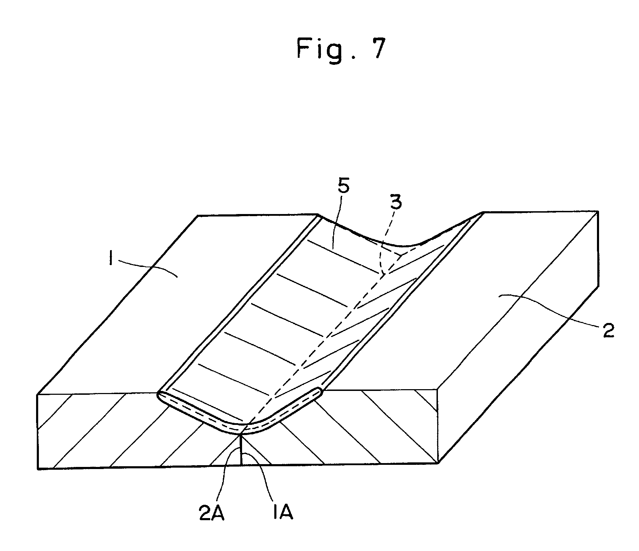

As a consequence, heat is generated by friction between the cladding material 4 and the groove 3 of the plate parts 1 and 2 to bring contacting metal portions into a plasticized state. Plasticized metal portions gradually solidify on cooling to form a cladded weld portion 5 as shown in Fig. 7.

In this instance, part of plasticized material at the lower end of the cladding material 4 is deposited on the front side of the groove 3 to form a cladded weld portion 5. On the other hand, the remainder of the plasticized cladding material hangs on the lower end of the cladding material 4 and solidifies in a wedge-like shape as indicated by the solidified portion 6.

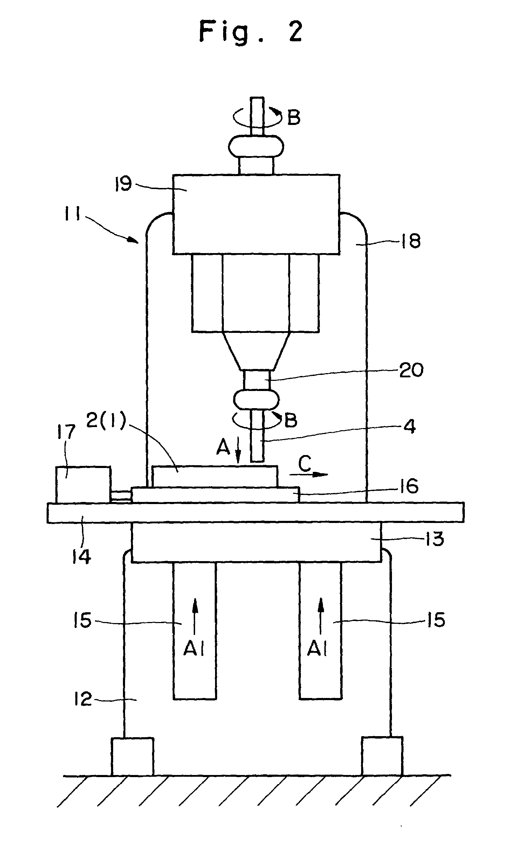

Illustrated in Fig. 2 is the frictional welding apparatus 11, which is employed in the present embodiment. The frictional welding apparatus 11 is largely constituted by a leg portion 12, a lift table 13 which is movable up and down relative to the leg portion 12, an electric motor 19 and a chuck 20, which will be described hereinafter.

Denoted at 14 is a support table which is provided on the lift table 13, and at 15 are pressing cylinders which drive the support table 14 to move in upward and downward directions along with the lift table 13. In this instance, both of the pressing cylinders 15 are located between the leg portion 12 and lift table 13 of the frictional welding apparatus 11, and adapted to push the lift table 13, for example, relatively in the direction of arrow A1 in Fig. 2 for pressing the cladding material 4 in the direction of arrow A against the plate parts 1 and 2.

Indicated at 16 is a slide table which is slidably provided on the support table 14. The slide table 16 is driven in the direction of arrow C in Fig. 2 by a traverse slide mechanism 17. As shown in Fig. 1, the plate parts 1 and 2 are firmly fixed on the slide table 16 by bolts (not shown), with the flat meeting surfaces 1A and 2A in butt engagement with each other.

Designated at 18 is a motor stand which is provided on the leg portion 12 on the rear side of the support table 14, and at 19 is an electric motor which is mounted on an upper portion of the motor stand 18 as a rotational drive source. By this electric motor 19, the chuck 20 which grips the cladding material 4 is rotated in the direction of arrow B. By rotation of the chuck 20, the cladding material 4 is put in rotation, for example, at a speed of 1,600 to 3,000 rpm.

Further, for pressing the cladding material 4 against the plate parts 1 and 2, for example, a pressure of 5 to 90 MPa is applied in the direction of arrow A. On the other hand, by the slide table 16, the plate parts 1 and 2 are fed in the direction of arrow C, for example, at a speed of 0.1 to 6mm/sec relative to the cladding material 4.

By the use of the frictional welding apparatus 11 with the above arrangements according to the present embodiment, plate parts 1 and 2 are frictionally joined together by a method as described below with reference to Figs. 2 through 6.

Firstly, the plate parts 1 and 2 to be joined are formed with flat meeting surfaces 1A and 2A at the respective joining ends, along with beveled surfaces 1B and 2B which are inclined with a predetermined angle toward each other as shown in Fig. 3.

The plate parts 1 and 2 are set in a butt welding position on the slide table 16 as shown in Fig. 2, with the respective flat meeting surfaces 1A and 2A in butt engagement with each other. In this state, the two plate parts 1 and 2 are immovably fixed to the slide table 16 by the use of bolts (A Fixing Stage).

In the next place, with the plate parts 1 and 2 fixed on the slide table 16, the cladding material 4 is lowered into the groove 3 of the plate parts 1 and 2 and the lower end of the cladding material 4 is pressed against middle portions of the beveled surfaces 1B and 2B as shown in Fig. 4.

More specifically, the pressing cylinder 15 of the frictional welding apparatus 11 of Fig. 2 is actuated to press the support table 14 in the direction of arrow A1 along with the lift table 13, whereupon the cladding material 4 is relatively pressed in the direction of arrow A against the plate parts 1 and 2. Then, in this state, the electric motor 19 is actuated to put the cladding material 4 in high speed rotation of approximately 1,600 to 3,000 rpm.

As a result, as shown in Fig. 4, the lower end of the cladding material 4 is continuously held in frictional contact with middle portions of the beveled surfaces 1B and 2B to generate frictional heat, for example, heat of approximately 800 to 1,200°C (A Heat Generating Stage). The temperature of heat which is generated by friction is set at a level lower than the melting point of the joining plate parts 1, 2 (e.g., lower than 1,500°C).

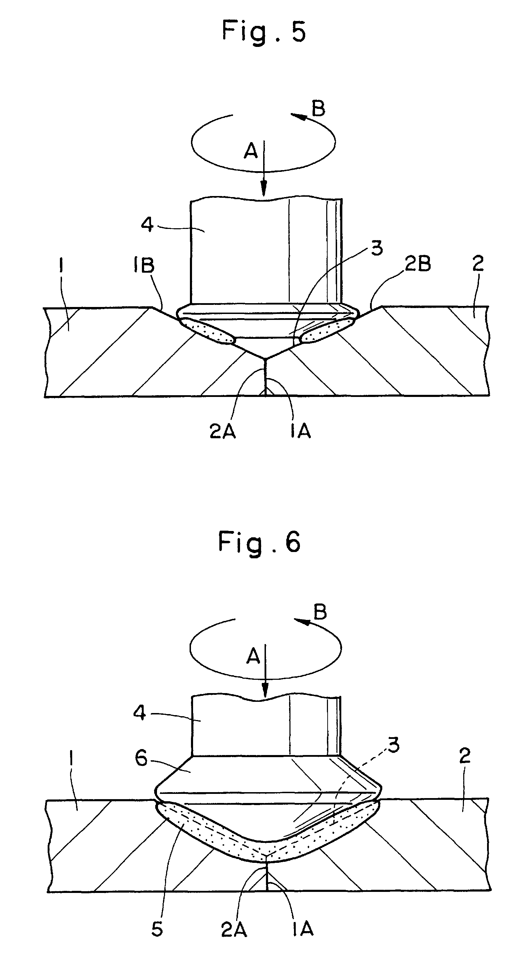

By the frictional heat, contacting portions of the beveled surfaces 1B and 2B of the plate parts 1 and 2 and the cladding material 4 are plasticized and brought into a plasticized state as shown in Figs. 5 and 6. Further, under the pressure which is applied in the direction of arrow A and with progress of plasticization, the contacting side of the cladding material 4 is pushed deeper and deeper toward the bottom of the groove 3.

In this regard, the heat generating energy (En) by frictional contact can be obtained by multiplying friction coefficient μ, constant K, pressure F which is applied on the cladding material 4 in the direction of arrow A, and distance of movement L, as expressed by the following Equation (1).

$$En = \mu \times K \times F \times L \qquad (1)$$

As the cladding material 4 is put in rotation, the distance of movement L of the cladding material 4 differs between inner and outer peripheral portions, that is, an outer peripheral portion is moved over a greater distance than an inner peripheral portion.

As a consequence, frictional heat generation starts from middle portions of the beveled surfaces 1B and 2B which are in frictional contact with outer peripheral portions of the cladding material 4, and the frictional heat is propagated to the entire surfaces of the groove 3 from the center of frictional heat generation in middle portions of the beveled surfaces 1B and 2B.

Further, since the amount of heat generation is greater and the volume of plasticization is larger in outer peripheral portions of the cladding material 4, plasticized metal portions which occur between outer peripheral portions of the cladding material 4 and middle portions of the beveled surfaces 1B and 2B tend to spread in downward or upward directions. Therefore, plasticized metal portions are fed deeper and deeper toward the bottom of the groove 3.

In the next place, as the traverse slide mechanism 17 is actuated to move the slide table 16 in the direction of arrow C in Fig. 2, the cladding material 4 is moved relatively in the direction of arrow C in Fig. 1 along the flat meeting surfaces 1A and 2A. Whereupon, on the lower side, part of plasticized cladding material 4 is left and deposited on the surface of the groove 3 (on the beveled surfaces 1B and 2B).

Then, as the cladding material 4 of heat source is moved away to a distant point, part of plasticized metal portions as well as deposited cladding material 4 on the surfaces of the groove 3 solidify on cooling to form a cladded weld portion 5 as shown in Figs. 6 and 7, thereby joining the plate parts 1 and 2 integrally with each other (A Welding Stage).

In this instance, part of plasticized material occurring at the lower end of the cladding material 4 is deposited on the surface of the groove 3 to form a cladded weld portion 5, while the remainder of plasticized material hangs on the lower side of the cladding material 4, forming a solidified portion 6 of a wedge-like shape as shown in Fig. 6.

When the cladding material 4 is put in use again for a frictional welding operation, it is gradually re-plasticized from the wedge-like solidified portion 6 to form a weld portion on a groove of joining objects in the same manner as described above.

Thus, according to the present embodiment of the invention, the plate parts 1 and 2 are formed with the flat meeting surfaces 1A and 2A at the respective joining ends along with the beveled surface 1B and 2B which are inclined toward the meeting ends with a predetermined inclination angle. After abutting the flat meeting surfaces 1A and 2A of the plate parts 1 and 2 against each other, the cladding material 4 in high speed rotation (in relative high speed movement) is pressed against the groove 3 on the plate parts 1 and 2 to generate heat of high temperature by friction between contacting metal surfaces.

The cladding material 4 which is held in rotation is moved along the flat meeting surfaces 1A and 2A of the plate parts 1 and 2. Part of plasticized material at the lower end of the cladding material 4 is left and deposited on the surface of the groove 3 between the plate parts 1 and 2 to form a weld portion 5. On the part of the beveled surfaces 1B and 2B of the groove 3, metal portions in frictional contact with the cladding material 4 can be brought into a plasticized state.

As a consequence, as the cladding material 4, a heat source, is moved away to a distant point, plasticized metal portions on the side of the groove 3 and part of plasticized metal portions which has deposited on the groove 3 solidify on cooling to form the cladding-like weld portion 5. The plate parts 1 and 2 are integrally joined with each other by the weld portion 5.

Further, the joining plate parts 1 and 2 are abutted against each other through the flat meeting surfaces 1A and 2A during a welding operation, in contrast to the above-mentioned prior art method in which the joining ends of plate parts are formed into sharp edges of acute angle. Accordingly, frictional heat which is generated by frictional contact with the rotating cladding material 4 under pressure is unlikely to stagnate at the flat meeting surfaces 1A and 2A. This means that the heat capacity on the side of the flat meeting surfaces 1A and 2A can be increased while preventing plasticization from proceeding to an excessive degree in these regions.

Further, the flat meeting surfaces 1A and 2A of the plate parts 1 and 2 serve to prevent melted metals from flowing to the back side of the plate parts 1 and 2 as a result of plasticization. In addition, the flat meeting surfaces 1A and 2A serve to secure sufficient rigidity of the plate parts 1 and 2 for sustaining the pressure which is exerted thereon by the cladding material 4, and to form a weld portion 5 as shown in Fig. 7 which is stable in shape.

Thus, the present embodiment of the invention makes it possible to form a larger weld portion 5 on the front side of the groove 3 which is provided across the joining ends of the plate parts 1 and 2, and to increase the strength of the weld between the two plate parts 1 and 2. It also contributes to improve the commercial value of the frictionally welded plate parts 1 and 2 as well as the yield of products by stabilizing the shape of the weld portion 5.

Further, with regard to the groove 3 between the plate parts 1 and 2, the open angle θ of the beveled surfaces 1B and 2B is preferably set, for example, in the range of 60 to 150 degrees as shown in Fig. 3 in order to stabilize the shape of the weld portion 5. It has also been confirmed by experiments that the strength of the weld portion between the plate parts 1 and 2 is increased by such a groove arrangement.

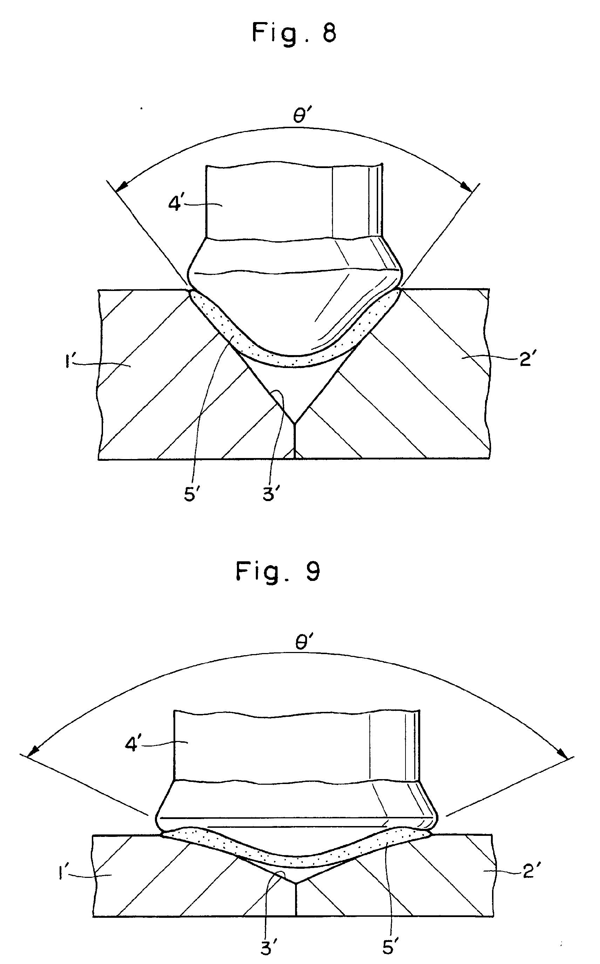

More particularly, for example, in a case where a groove 3' with an open angle θ' smaller than 60 degrees is provided between plate parts 1' and 2' as in a comparative example shown in Fig. 8, even if plasticization did occur at the lower end of a cladding material 4', a plasticized metal portion would not reach a deep bottom portion of the groove 3' and a resulting weld portion 5' would leave part of bottom portions of the groove 3' unjoined.

The reason for this phenomenon is that the temperature at the bottom of the groove 3' remains at a relatively low level in the case of the groove 3' of a small open angle θ' because it is located at a greater distance from a middle portion of the groove 3', i.e., from the center of heat generation. This is assumed to be the reason why bottom portions of the groove 3' partly remain in an unjoined state.

Further, in a case where a groove 3' between plate parts 1' and 2' is arranged to have an open angle θ' larger than 150 degrees as in another comparative example shown in Fig. 9, for example, it has also been found that part of bottom portions of the groove 3' sometimes remains unjoined.

In this connection, in a case where the outside diameter of the cladding material 4' is small enough as compared with the width of the groove 3', there is little possibility of leaving a bottom portion of the groove 3' in an unjoined state even if the open angle θ' of the groove 3' is greater than 150 degrees.

Therefore, according to the present embodiment, a frictional welding operation is carried out by the use of a cladding material 4 having an outside diameter D smaller than the width W of the groove 3 (D<W) and pressing the lower end face of the cladding material 4 against middle portions of beveled surfaces 1B and 2B as shown in Fig. 4. In addition, the groove 3 has an open angle θ which is, for example, in the range of 60 to 150 degrees. As described hereinbefore, these arrangements make it possible to stabilize the shape of the weld portion 5 and to enhance the strength of the weld between the plate parts 1 and 2 in a secure manner.

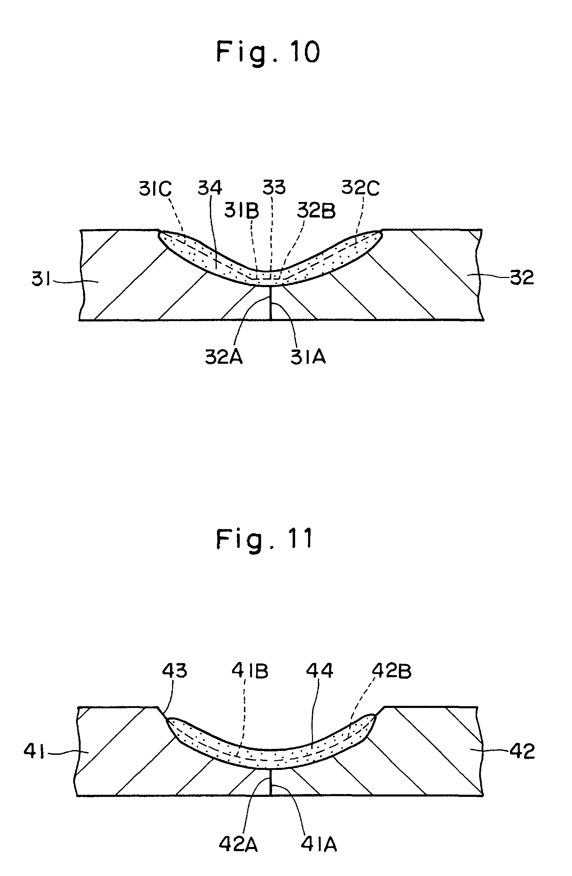

Now, turning to Fig. 10, there is shown a second embodiment of the present invention. In the following description of the second embodiment, these component parts which are identical with the counterparts in the foregoing first embodiment are designated simply by similar reference numerals to avoid repetitions of same explanations. The second embodiment has features in that plate parts 31 and 32 to be joined are provided with first beveled surfaces 31B and 32B and second beveled surfaces 31C and 32C, along with flat meeting surfaces 31A and 32A.

In this case, the plate parts 31 and 32 to be joined are arranged substantially in the same manner as the plate parts 1 and 2 in the foregoing first embodiment, except that a groove 33 of a substantially trapezoidal shape is formed between the plate parts 31 and 32 by way of the first beveled surfaces 31B and 32B and the second beveled surfaces 31C and 32C.

More particularly, the groove 33 is formed by the first beveled surfaces 31B and 32B and the second beveled surfaces 31C and 32C which are different from each other in angle of inclination. Namely, relative to the flat meeting surfaces 31A and 32A, the first beveled surfaces 31B and 32B on the inner side of the groove 33 are inclined at a greater angle than the beveled surfaces 31C and 32C on the outer side of the groove 33. For instance, the inner beveled surfaces 31B and 32B are formed substantially at right angles with respect to the flat meeting surfaces 31A and 32A. On the other hand, the outer beveled surfaces 31C and 32C are formed approximately at 60 degrees with respect to the flat meeting surfaces 31A and 32A.

In the case of the present embodiment with the arrangements as described above, the plate parts 31 and 32 are placed in a butt welding position with the flat meeting surfaces 31A and 32A in abutting engagement with each other, and a cladding material 4 which is put in high speed rotation is pressed against the groove 33 to cause plasticization to frictionally contacting surfaces thereby to form a weld portion 34. Even in this case, one can obtain the same operational effects as in the foregoing first embodiment.

Further, in this case in which the groove 33 is provided with the inner beveled surfaces 31B and 32B and the outer beveled surfaces 31C and 32C, it becomes possible to shorten the distance from the bottom of the groove 33 to middle portions of the outer beveled surfaces 31C and 32C, which is the center of heat generation, and to increase the heat capacity on the bottom side of the groove 33. The above arrangements can suppress temperature drops at the bottom of the groove 33 and form the weld portion 34 of a stabilized form at the bottom of the groove 33 without leaving an unjoined portion or portions at the bottom of the groove 33.

Now, referring to Fig. 11, there is shown a third embodiment of the present invention. In the following description of the third embodiment, those component parts which are identical with the counterparts in the foregoing first embodiment are simply designated by similar reference numerals to avoid repetitions of same explanations. The present embodiment has features in that plate parts 41 and 42 to be joined are provided with beveled surfaces 41B and 42B of a concavely curved shape at the joining ends along with flat meeting surfaces 41A and 42A.

In this instance, the joining plate parts 41 and 42 are arranged substantially in the same manner as the plate parts 1 and 2 of the first embodiment, except that a U-shaped groove 43 is formed between the two plate parts 41 and 42 by the beveled surfaces 41B and 42B.

In the case of the present embodiment with the above-described arrangements, the two plate parts 41 and 42 are placed in a butt welding position, with the respective flat meeting surfaces 41A and 42A in abutting engagement with each other, and a cladding material 4 which is put in high speed rotation is pressed against the groove 43 between the plate parts 41 and 42 to cause plasticization to frictionally contacting surfaces thereby to form a weld portion 44. Even in this case, one can obtain substantially the same operational effects as in the foregoing first embodiment.

Further, in this case having the groove 43 formed by beveled surfaces 41B and 42B of a concavely curved shape, it is also possible to shorten the distance from the bottom of the groove 43 to middle portions of the beveled surfaces 41B and 42B, that is, from the center of heat generation, and to increase the heat capacity on the bottom side of the groove 43. Thus, the above arrangements can suppress temperature drops at the bottom of the groove 43 and form a weld portion 44 of a stabilized shape without leaving an unjoined portion or portions at the bottom of the groove 43.

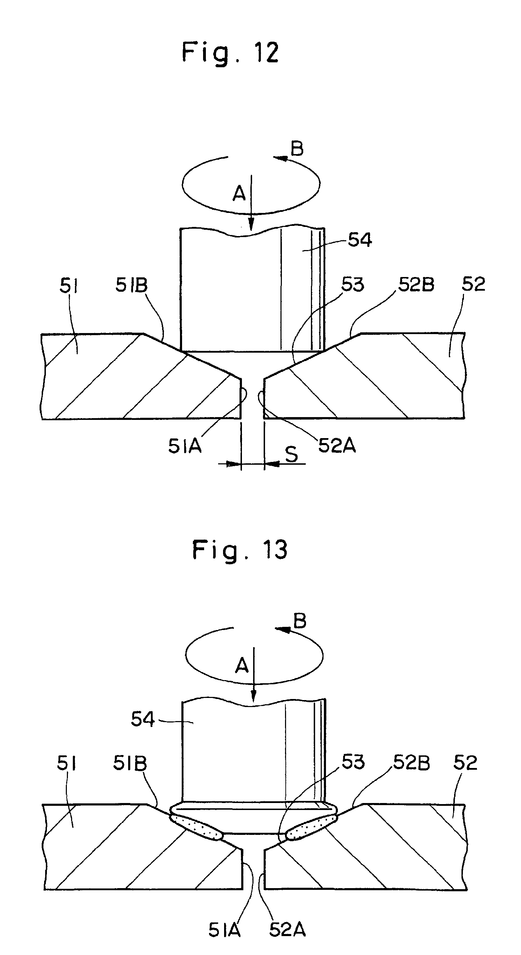

Now, turning to Figs. 12 to 15, there is shown a fourth embodiment of the present invention. In the following description of the fourth embodiment, those component parts which are identical with the counterparts in the foregoing first embodiment are simply designated by similar reference numerals to avoid repetitions of same explanations.

The present embodiment of the invention has features in that plate parts 51 and 52 are provided with flat meeting surfaces 51A and 52A and beveled surfaces 51B and 52B at the respective joining ends, and are joined together by frictional welding, with a gap space S between the flat meeting surfaces 51A and 52A.

In this instance, the joining plate parts 51 and 52, groove 53 and cladding material 54 are arranged similarly to the plate parts 1 and 2, groove 3 and cladding material 4 of the foregoing first embodiment, respectively. However, the present embodiment differs from the first embodiment in that a gap space S is provided between the flat meeting surfaces 51A and 52A of the plate parts 51 and 52 as shown in Fig. 12.

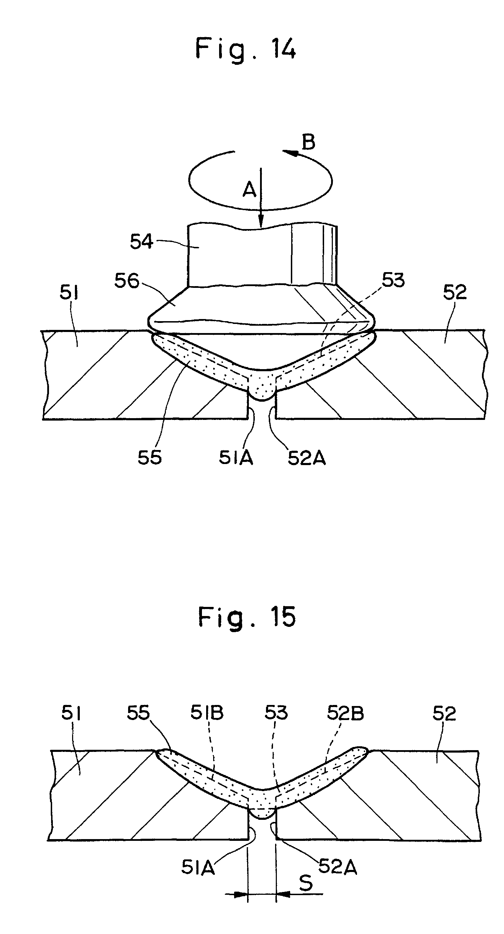

Thus, in the case of the present embodiment with the above arrangements, similarly the cladding material 54 which is put in high speed rotation is pressed against the groove 53 which is provided between the plate parts 51 and 52 to cause plasticization to frictionally contacting surfaces thereby to form a weld portion 55 as shown in Fig. 15. Even in this case, one can obtain substantially the same operational effects as in the foregoing first embodiment.

Namely, also in this case, the joining plate parts 51 and 52 are placed to oppose end to end and fixed that position in a fixing stage as shown in Fig. 12 by the use of bolts (not shown). However, in this case, a gap space S is provided between flat meeting surfaces 51A and 52A of the joining plate parts, and in this state the two plate parts 51 and 52 are immovably fixed on a slide table 16 as shown by way of example in Fig. 2.

In the next place, as shown in Figs. 12 and 13, with the plate parts 51 and 52 fixed in the positions described above, a cladding material 54 is lowered into a groove 53 as indicated by arrow A to press the lower end face of the cladding material 54 against middle portions of beveled surfaces 51B and 52B. Then, in this state, the cladding material 54 is rotated in the direction of arrow B at a high speed to generate heat, for example, heat of approximately 800 to 1,200 degrees Centigrade by friction of contacting surfaces (A Frictional Heat Generating Stage).

By the frictional heat, contacting surfaces of the beveled surfaces 51B and 52B of the plate parts 51 and 52 and the cladding material 54 are gradually softened and brought into a plasticized state as shown in Figs. 13 and 14. Under the pressure applied in the direction of arrow A and in step with plasticization of contacting surfaces, the cladding material 54 is pushed deeper and deeper toward the bottom of the groove 53.

Nextly, the slide table 16 which is exemplified in Fig. 2 is driven to move in the direction of arrow C, the cladding material 54 is moved relatively along the flat meeting surfaces 51A and 52A of the plate parts 51 and 52. At this time, part of plasticized metal at the lower end of the cladding material 54 is left and deposited on the surface of the groove 53 (on the beveled surfaces 51B and 52B).

As the cladding material 54, a heat source, is relatively moved away to a distant point, part of plasticized metal which has been produced on the surfaces of the groove 53 and the deposited cladding material 54 are allowed to cool off and solidify to form a weld portion 55 as shown in Figs. 14 and 15 thereby to join the plate parts 51 and 52 integrally with each other (A Welding Stage).

In this instance, the plasticized lower end portion of the cladding material 54 is partly deposited on the surfaces of the groove 53 to form the weld portion 55, while the remainder of the plasticized portion remains on the lower end of the cladding material, forming a wedge-like solidified portion 56 at the lower end of the cladding material 54 as shown in Fig. 14.

Thus, in the present embodiment, the joining plate parts 51 and 52 are provided with the flat meeting surfaces 51A and 52A at the respective joining ends, along with beveled surfaces 51B and 52B. Accordingly, the arrangements of this embodiment also make it possible to shorten the distance to the bottom (to the flat meeting surfaces 51A and 52A) of the groove 53 from middle portions of the beveled surfaces 51B and 52B, that is, from the center of heat generation, and to increase the heat capacity of the bottom side to form a weld portion 55 of a stabilized shape on the front side of the groove 53.

Further, the plate parts 51 and 52 can be frictionally joined with each other with a gap space S between the flat meeting surfaces 51A and 52A. This means that the frictional welding method of the present invention, which can bond the plate parts 51 and 52 strongly to each other despite the existence of the intervening gap space S, can be applied to widely to those parts which are normally difficult to join firmly to each other by conventional methods using, for example, arc (electric arc) or laser as a heat source.

Even in the case of the foregoing second (or third) embodiment, it is possible to join the plate parts 31 and 32 (or 41 and 42) by the friction welding even if there is an intervening gap space S which exists between these two plate parts 31 and 32 (or 41 and 42), in a manner similar to the above-described fourth embodiment.

Further, in the above-described first embodiment, the cladding material 4 is pressed against the groove 3 between the joining plate parts 1 and 2 and at the same time put in high speed rotation to generate frictional heat between contacting surfaces between the plate parts and the cladding material. However, the present invention is not limited to the particular arrangements shown. For example, for generating frictional heat, arrangements may be made to put the cladding material 4 in fine high-speed reciprocating movements as it is pressed against the groove 3. What is important here is to put the cladding material 4 in high speed movement relative to joining plate parts 1 and 2 to generate frictional heat. The same applies to the above-described second to fourth embodiments of the invention.

Further, in the above-described first embodiment, the frictional welding method of the invention is by way of example to flat plate parts 1 and 2. However, the present invention is not limited to plate parts of this sort. For example, the present invention can be similarly employed for welding metal plates of curved shapes or metal beams or thick metal plates. The same goes with the above-described second to fourth embodiments of the invention.

Furthermore, two plate parts to be joined are not limited to iron-base metal materials like steel plates, and, for example, include other metal materials such as copper, aluminum or alloys of these metals or other non-metallic materials such as plastic materials which can be brought into a plasticized state by application of heat. Accordingly, basically it suffices as long as the two joining members and the cladding material can be formed of the same material.

**Claims**

1. A method of friction welding, comprising:

   a fixing stage of providing a flat meeting surface and a beveled surface at a joining end of each one of parts to be welded together to form a groove between and along joining ends of said two parts, and fixing said parts with flat meeting surfaces of the respective parts held in abutting engagement with each other;
   a frictional heat generating stage of generating frictional heat by pressing an end of a consumable cladding material against said beveled surfaces of said two parts while moving said cladding material relative to the fixed parts; and
   a welding stage of bringing a contacting distal end portion of the cladding material to a plasticized state by the frictional heat and feeding plasticized cladding material to said groove between said two parts, urging said plasticized cladding material to flow toward and along said flat meeting surfaces to form a weld portion between said parts.

2. A method of friction welding, comprising:

   a fixing stage of providing a flat meeting surface and a beveled surface at a joining end of each one of parts to be welded together to form a groove between and along joining ends of said two parts, and fixing said parts with flat meeting surfaces of the respective parts held in abutting engagement with each other through a gap space;
   a frictional heat generating stage of generating frictional heat by pressing an end of a consumable cladding material against said beveled surfaces of said two parts while moving said cladding material relative to the fixed parts; and
   a welding stage of bringing a contacting distal end portion of the cladding material to a plasticized state by the frictional heat and feeding plasticized cladding material to said groove between said two parts, urging said plasticized cladding material to flow toward and along said flat meeting surfaces to fill up said gap space and to form a weld portion between said parts.

3. A frictionally welded structure composed of a couple of parts joined together by: providing a flat meeting surface and a beveled surface at a joining end of each one of parts to form a groove between and along joining ends of said two parts, and fixing said parts with flat meeting surfaces of the respective parts held in abutting engagement with each other; generating frictional heat by pressing an end of a consumable cladding material against said beveled surfaces of said two parts while moving said cladding material relative to the fixed parts; and bringing a contacting distal end portion of said cladding material to a plasticized state by the frictional heat and feeding plasticized cladding material to said groove between said two parts, urging said plasticized cladding material to flow toward and along said flat meeting surfaces to form a weld portion between said parts.

4. A frictionally welded structure as defined in claim 3, wherein said flat meeting surfaces of said two parts are joined together by said cladding material in abutting engagement with each other.

5. A frictionally welded structure as defined in claim 3, wherein said flat meeting surfaces of said two parts are joined together by said cladding material in such a way as to leave an intervening gap space there between.

**Amended claims under Art. 19.1 PCT**

1. (Amended) A method of friction welding, comprising:

a fixing stage of providing a flat meeting surface and a beveled surface at a joining end of each one of parts to be welded together to form a groove between and along joining ends of said two parts, and fixing said parts with flat meeting surfaces of the respective parts held in abutting engagement with each other; a frictional heat generating stage of generating frictional heat by pressing a lower end face of a consumable cladding material against a middle portion of each one of said beveled surfaces of said two parts while moving said cladding material relative to the fixed parts; and a welding stage of bringing a contacting distal end portion of the cladding material to a plasticized state by the frictional heat and feeding plasticized cladding material to said groove between said two parts, urging said plasticized cladding material to flow toward and along said flat meeting surfaces to form a weld portion between said parts.

2. (Amended) A method of friction welding, comprising:

a fixing stage of providing a flat meeting surface and a beveled surface at a joining end of each one of parts to be welded together to form a groove between and along joining ends of said two parts, and fixing said parts with flat meeting surfaces of the respective parts held in abutting engagement with each other through a gap space; a frictional heat generating stage of generating frictional heat by pressing a lower end face of a consumable cladding material against a middle portion of each one of said beveled surfaces of said two parts while moving said cladding material relative to the fixed parts; and a welding stage of bringing a contacting distal end portion of the cladding material to a plasticized state by the frictional heat and feeding plasticized cladding material to said groove between said two parts, urging said plasticized cladding material to flow toward and along said flat meeting surfaces to fill up said gap space and to form a weld portion between said parts.

3. (Amended) A frictionally welded structure composed of a couple of parts joined together by: providing a flat meeting surface and a beveled surface at a joining end of each one of parts to form a groove between and along joining ends of said two parts, and fixing said parts with flat meeting surfaces of the respective parts held in abutting engagement with each other; generating frictional heat by pressing a lower end face of a consumable cladding material against a middle portion of each one of said beveled surfaces of said two parts while moving said cladding material relative to the fixed parts; and bringing a contacting distal end portion of said cladding material to a plasticized state by the frictional heat and feeding plasticized cladding material to said groove between said two parts, urging said plasticized cladding material to flow toward and along said flat meeting surfaces to form a weld portion between said parts.

4. A frictionally welded structure as defined in claim 3, wherein said flat meeting surfaces of said two parts are joined together by said cladding material in abutting engagement with each other.

5. A frictionally welded structure as defined in claim 3, wherein said flat meeting surfaces of said two parts are joined together by said cladding material in such a way as to leave an intervening gap space there between.

**STATEMENT OF AMENDMENT UNDER ARTICLE 19 (1)**

The present invention concerns friction welding of two parts which are formed with flat meeting surfaces at the confronting joining ends, along with beveled surfaces which define a groove between the two parts. In this connection, claims 1, 2 and 3 have been amended to make clear that, for generating frictional heat, a lower end face of a consumable cladding material is pressed against a middle portion of each one of the beveled surfaces on the two joining parts and at the same time put in movement relative to the latter.

In the case of the present invention, heat generation starts from middle portions of the beveled surfaces which are held in frictional contact with an end face of a cladding material, and the frictional heat is transmitted almost to the entire groove to feed and deposit plasticized cladding material on bottom portions of the groove in a stabilized manner.

In contrast, in "Welding & Metal Fabrication" cited in the search report, the description of "Friction processes benefit from a gas shield" teaches use of a shielding gas in friction welding, thereby to suppress air pollution and prevent oxidization of deposit surfaces.

However, the publication does not contain descriptions with regard to the shape of a groove between two joining parts at all. Namely, the publication never shows or even suggests joining parts which are provided with flat meeting surfaces and bevel surfaces at the confronting joining ends as in the applicant's invention.

Besides, none of the cited references shows a method of pressing a cladding material on middle portions of beveled surfaces of a groove in any way whatsoever.

On the other hand, JP11-267857A describes a method of friction welding in a water bath, and JP61-176484A describes a method of joining metal plates by the use of a spinning plug. These references are completely irrelevant to and contain no teaching which would have suggested the applicant's invention.

# Fig. 1

# Fig. 2

# Fig. 3

# Fig. 4

EP 1 354 660 A1

# Fig. 5

# Fig. 6

# Fig. 7

# Fig. 8

# Fig. 9

Fig. 10

31C  34  33  32C
31B  32B

31

32

32A  31A

Fig. 11

43  41B  44  42B

41

42

42A  41A

Fig. 12

Fig. 13

# Fig. 14

# Fig. 15

Fig. 16

# Fig. 17

101    101A    103    105    102A    102

101B    102B

# Fig. 18

101    105    102

# INTERNATIONAL SEARCH REPORT

| International application No. |
| --- |
| PCT/JP01/10970 |

**A. CLASSIFICATION OF SUBJECT MATTER**
Int.Cl$^7$   B23K20/12

According to International Patent Classification (IPC) or to both national classification and IPC

**B. FIELDS SEARCHED**

Minimum documentation searched (classification system followed by classification symbols)
Int.Cl$^7$   B23K20/12

Documentation searched other than minimum documentation to the extent that such documents are included in the fields searched
Jitsuyo Shinan Koho        1922-1996    Jitsuyo Shinan Toroku Koho  1996-2002
Kokai Jitsuyo Shinan Koho  1971-2002    Toroku Jitsuyo Shinan Koho  1994-2002

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | Wayne THOMAS, et. al., Friction processes benefit from a gas shield, Welding & Metal Fabrication, Nippon Tokkyocho Johokan, received on 29 May 1998 (29.05.1998), Vol.66, No.4, pp.7-11 | 1-5 |
| A | JP 11-267857 A (Daido Steel Co., Ltd.), 05 October, 1999 (05.10.1999), Column 5, line 2 to Column 6, line 10; Figs. 5 to 6 (Family: none) | 1-5 |
| A | JP 61-176484 A (Ishikawajima-Harima Heavy Industries Co., Ltd.), 08 August, 1986 (08.08.1986), Full text   (Family: none) | 1-5 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25 February, 2002 (25.02.02) | 05 March, 2002 (05.03.02) |

| Name and mailing address of the ISA/ Japanese Patent Office | Authorized officer |
| --- | --- |
| Facsimile No. | Telephone No. |

Form PCT/ISA/210 (second sheet) (July 1992)